# EUROPÄISCHE PATENTANMELDUNG

(11) **EP 2 061 000 A2**
(43) Veröffentlichungstag der Anmeldung: **20.05.2009**
(21) Anmeldenummer: 08018769.3
(22) Anmeldetag: 28.10.2008
(51) Int. Cl.: G06Q 10/00, G06K 19/07

(54) **Identitätsbasierte Produktsicherung**

(30) Priorität: 30.10.2007 DE 102007051787
(71) Anmelder: Giesecke & Devrient GmbH, 81677 München (DE)
(72) Erfinder: Linke, Andreas, Prof. Dr.-Ing, 83623 Dietramszell (DE)

(57) **Zusammenfassung**

Ein Produkt (1) wird gekennzeichnet, indem ein RFID-Etikett (2) mit einer Produktkennzeichnung (LBL) auf dem Produkt angebracht wird (S9), wobei die Produktkennzeichnung (LBL) durch Transformieren einer dem Produkt eindeutig zugeordneten Produktidentifikation (ID) gebildet wird (S6). Die Prüfung der Echtheit eines derartigen Produkts (1) erfolgt, indem die Produktkennzeichnung (LBL) aus dem RFID-Etikett (2) des Produkts (1) ausgelesen (S11) und rücktransformiert (S13) wird, eine Datenkommunikationsverbindung (17) zwischen dem Prüfgerät (10) und einem Hintergrundserver (18), auf dem die Produktidentifikation (ID) vorliegt, aufgebaut wird (S14) und die rücktransformierte Produktkennzeichnung (LBL) mit der Produktidentifikation (ID) über die Datenkommunikadonsverbindung (17) mit dem Hintergrundserver (18) abgeglichen wird (S16). Die Rücktransformation (S13) besteht vorzugsweise aus der Entschlüsselung der transformierten Produktkennzeichnung (LBL) durch eine öffentlich zugängliche Produktbezeichnung (TM), die vorzugsweise auch auf dem RFID-Etikett abgespeichert wird (S8) und ausgelesen werden kann (S12).

## Beschreibung

Die vorliegende Erfindung betrifft Verfahren zum Kennzeichnen eines Produkts mit einer Produktkennzeichnung und zum Prüfen eines gekennzeichneten Produkts sowie ein derartiges Produkt und ein Prüfgerät.

Besonders fälschungsgefährdete kommerzielle Produkte, wie z. B. wertvolle Verbrauchs- oder Konsumgüter, müssen gegen Produktfälschungen oder unerlaubte Nachahmungen geschützt werden. In diesem Zusammenhang ist es bekannt, diese Produkte mit kryptographischen Kennzeichnungen zu versehen, die mit Hilfe einer kryptographischen Infrastruktur herstellerseitig erzeugt werden und die zur Verifikation der Echtheit eines betreffenden Produkts später geprüft werden können.

Bei einem symmetrischen Kryptographieverfahren sind der Verschlüsselungsschlüssel eines Nachrichtensenders und der Entschlüsselungsschlüssel eines Nachrichtenempfängers identisch, was eine gesicherte Weitergabe des geheimen Ver- und Entschlüsselungsschlüssels an den jeweiligen Kommunikationspartner erfordert. Asymmetrische Verfahren verwenden demgegenüber einen öffentlichen Verschlüsselungsschlüssel, der gefahrlos weitergegeben werden kann, da er zum Entschlüsseln verschlüsselter Nachrichten nicht geeignet ist. Ein asymmetrisches Verfahren erfordert jedoch eine geeignete Infrastruktur zur Weitergabe von öffentlichen Verschlüsselungsschlüsseln, die zudem verhältnismäßig lang sind.

Eine identitätsbasierte Verschlüsselung, bei der ein öffentlicher Verschlüsselungsschlüssel aus einer öffentlichen Identifikation des Nachrichtenempfängers besteht, die insofern merkbar ist, z.B. Name, E-Mail-Adresse oder dergleichen, ist aus der US 7,017,181 B2 und der US 6,886,096 B2 bekannt.

Zur automatisierten Echtheitsprüfung einer möglichst großen Zahl verschiedener Produkte direkt durch die Endkunden sind solche Verfahren jedoch bisher nicht geeignet, da sie einerseits besondere technische Voraussetzungen erfordern und andererseits häufig stark variierende Echtheitsmerkmale geprüft werden müssen.

Demzufolge ist es die Aufgabe der vorliegenden Erfindung, eine einfache und praktikable Produktsicherung und Echtheitsprüfung durch den Endkunden bereitzustellen.

Diese Aufgabe wird erfindungsgemäß durch ein Verfahren sowie ein Produkt mit den Merkmalen der unabhängigen Ansprüche gelöst. In davon abhängigen Ansprüchen sind vorteilhafte Ausgestaltungen und Weiterbildungen der Erfindung angegeben.

Bei einem erfindungsgemäßen Verfahren zum Kennzeichnen eines Produkts mit einer Produktkennzeichnung, anhand der die Echtheit des Produkts geprüft werden kann, wird dem Produkt zunächst eine Produktidentifikation zugeordnet, die einen Rückschluss auf die Echtheit des Produkts erlaubt. Die Produktidentifikation wird transformiert, um eine Produktkennzeichnung in digitaler Form zu erhalten, die schließlich auf das Produkt aufgebracht bzw. an diesem befestigt wird, indem sie in ein RFID-Etikett eingeschrieben wird und das RFID-Etikett an dem Produkt angebracht wird. Hierbei ist die Reihenfolge der Schritte des Einschreibens der Produktkennzeichnung in das RFID-Etikett und des Aufbringens des RFID-Etiketts auf das Produkt prinzipiell beliebig.

Die Produktidentifikation kann beispielsweise ein Identifikationscode sein, der aus einer Nummer, einer Zeichenkette oder einer sonstigen Kennung besteht, die dem Produkt vom Produkthersteller zugeordnet wird. Vorzugsweise besteht eine eineindeutige Zuordnung zwischen einer Produktidentifikation und dem betreffenden Produkt, so dass bei Kenntnis der Produktidentifikation direkt auf das konkrete Produkt zurückgeschlossen werden kann. Darüber hinaus kann die Produktidentifikation auch jede andere Art von Identifikationscode sein, die einen Rückschluss auf zumindest die Echtheit des Produkts zulässt. In jedem Falle weist die Wiedergewinnung der korrekten Produktidentifikation aus der Produktkennzeichnung das Produkt als "echtes" Originalprodukt aus. In diesem Zusammenhang wird als "Echtheit" die Eigenschaft des Produkts bezeichnet, ein originäres oder originales (Marken-) Produkt desjenigen Herstellers zu sein, mit dem ein Verbraucher das Produkt in Verbindung bringt - also ein nicht gefälschtes bzw. nicht nachgemachtes Produkt, bei dem z.B. jede Form der Markenpiraterie ausgeschlossen werden kann, weil der geheime Verschlüsselungsschlüssel nur dem Produkthersteller bekannt ist. Die Produktidentifikation ist hierbei zumindest dem Hersteller des Produkts bekannt, könnte aber auch ohne gravierende Sicherheitsnachteile anderweitig bekannt sein, da sie bei Unkenntnis des geheimen Schlüssels nicht verschlüsselt werden kann.

RFID-Etiketten, auch als RFID-Transponder bezeichnet, haben eine Antenne, einen analogen Schaltkreis zum Empfangen und Senden, sowie einen digitalen Schaltkreis und einen permanenten Speicher, in den die Produktkennzeichnung durch eine geeignete RFID-Schreibeinrichtung derart eingeschrieben werden kann, dass sie durch ein RFID-fähiges Prüfgerät auslesbar ist, z.B. über eine geeignete kontaktlose (Funk-) Verbindung. Das Auslesen kann z.B. durch preisgünstige und Endkunden und Zwischenhändlern im Rahmen der modernen Kommunikationstechniken ohnehin zur Verfügung stehende Geräte und Kommunikationstechniken durchgeführt werden. Es können somit Produkte jederzeit und fast an jedem Ort geprüft werden. Des Weiteren haben RFID-Etiketten als Speichermedien für Produktkennzeichnungen den Vorteil, dass sie preisgünstig sind und leicht in einen Produktionsprozess integriert werden können. Ferner können Echtheitsmerkmale, d.h. die Produktkennzeichnungen, durch die geeignete Speicherung im RFID-Etikett vereinheitlicht werden. Ein effizienter Schutz vor Markenpiraterie wird dadurch ermöglicht.

Vorzugsweise wird das RFID-Etikett derart auf das Produkt aufgebracht, dass es für Dritte sichtbar ist und auch eine Zerstörung des RFID-Etiketts, z. B. durch Durchbrechen des Etiketts, für Dritte sichtbar ist. Dies hat den Vorteil, dass der Besitzer eines durch ein erfindungsgemäßes RFID-Etikett geschützten Markenprodukts durch sichtbares Zerstören des Etiketts einem Diebstahl vorbeugen kann, nachdem er sich selbst von der Echtheit des Produkts überzeugt hat.

Bei der Transformation der Produktidentifikation zur Bildung einer Produktkennzeichnung wird die Produktidentifikation vorzugsweise durch Verschlüsselung der Produktidentifikation mit einem geheimen Verschlüsselungsschlüssel derart erzeugt, dass zur Prüfung der Produktkennzeichnung diese mit einer öffentlich zugänglichen Produktbezeichnung entschlüsselt werden kann. Dadurch wird die Produktidentifikation zum Verifizieren der Echtheit des Produkts wiedergewonnen. Die Produktkennzeichnung nimmt also die Funktion eines "kryptographischen Echtheitsnachweises" ein.

Ein derart gekennzeichnetes Produkt umfasst also eine in dem RFID-Etikett vorliegende Produktkennzeichnung, aus der die dem Produkt zugeordnete Produktidentifikation durch Entschlüsseln mit der öffentlich zugänglichen Produktbezeichnung ermittelt werden kann. Die öffentlich zugängliche Produktbezeichnung bildet hierbei einen öffentlichen Entschlüsselungsschlüssel als kryptographisches Pendant des vom Produkthersteller zur Verschlüsselung der Produktidentifikation verwendeten geheimen Verschlüsselungsschlüssels.

Es besteht also ein enger Zusammenhang zwischen dem geheimen Verschlüsselungsschlüssel, der vorzugsweise ausschließlich dem Produkthersteller vorliegt, und der öffentlich zugänglichen Produktbezeichnung, da die mit dem geheimen Verschlüsselungsschlüssel verschlüsselte Produktidentifikation ausschließlich durch eine Entschlüsselung mit der öffentlich zugänglichen Produktbezeichnung wiedergewonnen werden kann. Der geheime Verschlüsselungsschlüssel und die als öffentlicher Entschlüsselungsschlüssel fungierende öffentlich zugängliche Produktbezeichnung bilden somit ein Schlüsselpaar eines asymmetrischen Kryptographieverfahrens.

Als öffentlich zugängliche Produktbezeichnung kann ein Produktname und/ oder eine Produktmarke und/ oder der Name des Produktherstellers oder eine sonstige von einem Dritten lesbare Zeichenkette verwendet werden. Insbesondere bieten sich als Produktbezeichnung solche Angaben an, die direkt auf dem Produkt oder auf dessen Verpackung angebracht sind, so dass sie für eine Entschlüsselung der Produktkennzeichnung jederzeit unmittelbar zugänglich sind. Als Produktbezeichnung können selbstverständlich beliebige andere, den Verbrauchern geläufige und/ oder dem Produkt eindeutig zuordenbare Bezeichnungen verwendet werden, wie z. B. Abkürzungen, Schlagworte, Werbeslogans, Herstellersitz oder dergleichen. Insbesondere kann die Produktbezeichnung auch in einer elektronisch auslesbaren Weise auf das Produkt aufgebracht werden, z.B. in einer standardisierten und automatisiert lesbaren Schrift. Vorzugsweise wird die Produktbezeichnung jedoch auch in das RFID-Etikett eingeschrieben, z.B. im gleichen Arbeitsgang wie die Produktkennzeichnung, so dass mit einem Prüfgerät beide zur Echtheitsprüfung benötigten Angaben gemeinsam ausgelesen werden können. In diesem Fall besteht die Produktbezeichnung also aus einer digitalen Information, die auch eine öffentlich zugängliche und Verbrauchern geläufige Bezeichnung sein kann.

Vorzugsweise wird zumindest der Schritt des Bildens der Produktkennzeichnung durch Verschlüsseln der Produktidentifikation in einem abgesicherten Bereich bei dem Produkthersteller durchgeführt, um den geheimen Verschlüsselungsschlüssel zu schützen. Auf diese Weise wird eine Manipulationsmöglichkeit minimiert und die Integrität der Produktkennzeichnung als kryptographischer Echtheitsnachweis gewahrt. Zusätzlich können auch die Schritte des Bereitstellens der eineindeutigen Produktidentifikation und des Einschreibens der Produktkennzeichnung und/ oder der Produktbezeichnung in das RFID-Etikett und das Aufbringen des RFID-Etiketts auf dem Produkt in dem abgesicherten Bereich des Produktherstellers durchgeführt werden.

Zur späteren Prüfung der Echtheit des Produkts durch eine Prüfung der Produktkennzeichnung wird die Produktidentifikation benötigt. Diese wird deshalb an einen oder mehrere Hintergrundserver übertragen und dort gespeichert, damit ein Prüfgerät die Produktidentifikation über eine Datenkommunikationsverbindung zu dem Hintergrundserver erhalten kann, um die im RFID-Etikett vorliegende Produktkennzeichnung (die transformierte Produktidentifikation) mit der Produktidentifikation abzugleichen. Ein derartiger Hintergrundserver ist nicht notwendigerweise Bestandteil einer abgesicherten Umgebung des Produktherstellers, sondern kann bei einem Sicherheitsdienstleister vorhanden sein, der ein Prüfen der Produkte vieler verschiedener Produkthersteller ermöglicht. Auch muss es sich nicht um einen zentralen Hintergrundserver handeln, sondern es kann mehrere dezentrale oder regionale Hintergrundserver geben.

Der geheime Verschlüsselungsschlüssel wird durch einen der Transformation/Verschlüsselung der Produktidentifikation vorgelagerten Schritt auch in einem abgesicherten Bereich des Produktherstellers erzeugt. Dabei wird ein Verschlüsselungsschlüssel erzeugt, der die Produktidentifikation derart verschlüsselt, dass diese nur durch die öffentlich zugängliche Produktbezeichnung entschlüsselt werden kann. Der geheime Verschlüsselungsschlüssel wird also abhängig von der öffentlich zugänglichen Produktbezeichnung derart erzeugt, dass ein asymmetrisches kryptographisches Schlüsselpaar gebildet wird.

Bei einem Verfahren zum Prüfen der Echtheit eines Produkts, das nach dem oben genannten Verfahren mit einer Produktkennzeichnung versehen wurde, wird die Produktkennzeichnung zunächst durch eine Leseeinrichtung eines Prüfgeräts aus dem RFID-Etikett ausgelesen und rücktransformiert. Eine Kommunikationseinrichtung des Prüfgeräts baut eine Datenkommunikationsvorrichtung zu dem Hintergrundserver auf, dem die Produktidentifikation vorliegt, um die ausgelesene Produktkennzeichnung mit der Produktidentifikation über die Datenkommunikationsverbindung abzugleichen. Dazu fordert entweder eine Steuereinrichtung des Prüfgeräts die Produktidentifikation bei dem Hintergrundserver an, empfängt sie über die Datenkommunikationsverbindung und vergleicht die empfangene Produktidentifikation mit der rücktransformierten Produktkennzeichnung. Ebenso kann die Steuereinrichtung auch die rücktransformierte Produktkennzeichnung über die Datenkommunikationsverbindung an den Hintergrundserver schicken, wo diese mit der dort vorliegenden Produktidentifikation verglichen wird.

Eine bei diesem Abgleich festgestellte Übereinstimmung der entschlüsselten Produktkennzeichnung und der Produktidentifikation ist der Nachweis, dass das gekennzeichnete Produkt ein vom dem angegebenen Hersteller stammendes Originalprodukt und nicht etwa eine Nachahmung oder Fälschung ist. Das Vergleichsergebnis wird dann über die Datenkommunikationsverbindung an das Prüfgerät geschickt. In jedem der beiden Fälle kann das Vergleichsergebnis auf einer Anzeigenvorrichtung des Prüfgeräts angezeigt werden, so dass ein Benutzer dieses unmittelbar zur Kenntnis nehmen und reagieren kann.

Vorzugsweise wird die Datenkommunikation zwischen dem Hintergrundserver und dem Prüfgerät durch Kryptographieeinrichtungen des Hintergrundservers und des Prüfgeräts kryptographisch gesichert, um ein Ausspähen der Produktidentifikation oder der rücktransformierten Produktkennzeichnung zu verhindern.

Zur Rücktransformation der Produktkennzeichnung veranlasst die Steuereinrichtung des Prüfgeräts die Kryptographieeinrichtung, die Produktkennzeichnung mit der Produktbezeichnung als öffentlichem Entschlüsselungsschlüssel zu entschlüsseln. Falls die Produktbezeichnung sichtbar auf dem Produkt oder dessen Verpackung angebracht ist, kann sie auch mit einer entsprechenden optischen Leseeinrichtung ausgelesen werden. Falls es sich bei der Produktbezeichnung um eine lesbare Zeichenkette handelt, z.B. eine Marke, ein Produkt- oder Herstellername, kann ein Benutzer diese auch über eine Eingabevorrichtung in das Prüfgerät eingeben.

Vorzugsweise wird die Produktbezeichnung jedoch auch von dem Produkthersteller in dem Speicher des RFID-Etiketts gespeichert und wird von der Leseeinrichtung des Prüfgeräts ausgelesen, vorzugsweise zusammen mit der Produktkennzeichnung. Hierbei kann die Leseeinrichtung besonders vorteilhaft eine NFC-Leseeinrichtung sein, die die Produktbezeichnung und Produktkennzeichnung gemäß einem NFC-Protokoll in unmittelbarer Nähe zu dem zu prüfenden RFID-Etikett ausliest. So kann verhindert werden, dass die Echtheit eines Produkts über größere Distanzen unbefugt geprüft wird.

Da alle zur Prüfung der Produktkennzeichnung benötigten Informationen - d.h. die Produktkennzeichnung als kryptographischer Echtheitsnachweis und die Produktbezeichnung als öffentlicher Entschlüsselungsschlüssel - mit Vorliegen des zu prüfenden Produkts bekannt oder zumindest leicht ermittelbar sind, kann die Echtheit eines Produkts prinzipiell von jedem Endverbraucher und/ oder Zwischenhändler, Vertriebsstätte und/ oder Behörde ohne weiteres durchgeführt werden, der/ die über ein geeignetes Telekommunikationsendgerät als Prüfgerät verfügt, z.B. ein RFID- bzw. NFC-fähiges Mobilfunkgerät, ein persönlicher digitaler Assistent (PDA), ein tragbarer Computer oder andere Geräte, die mit Schnittstellen zur kontaktlosen Kommunikation ausgestattet sind. Die Datenkommunikationsverbindung zu dem Hintergrundserver kann dann z.B. über WLAN, ein Mobilfunknetz oder dergleichen hergestellt werden.

Gegenüber bekannten Lösungen zur Produktsicherung ergeben sich vielfältige Vorteile. Zunächst besitzt die dezentrale Echtheitsprüfung den Vorteil, dass sie unabhängig von einer weiteren kryptographischen und/ oder elektronischen Infrastruktur jederzeit durchgeführt werden kann. Hierzu kann beispielsweise ein lokal vorliegendes elektronisches Gerät eines Verbrauchers oder eines Händlers verwendet werden. Darüber hinaus ist ein durch eine Produktbezeichnung vorgegebener öffentlicher Entschlüsselungsschlüssel leicht merkbar bzw. aus dem RFID-Etikett auslesbar.

Vorzugsweise wird die Prüfung der Produktkennzeichnung von einer als Steuerapplikation vorliegenden Steuereinrichtung des Prüfgeräts durchgeführt, die auf einem elektronischen Gerät eines Verbrauchers oder Händlers installiert und von dessen Prozessor ausführbar ist. Die Steuerapplikation kann einmalig auf dem elektronischen Gerät installiert werden, beispielsweise mittels eines von dem Hersteller bereitgestellten Datenträgers oder durch ein Herunterladen aus dem Internet von einer Website des Produktherstellers oder eines spezialisierten Sicherheitsdienstleisters, der den Hintergrundserver betreibt.

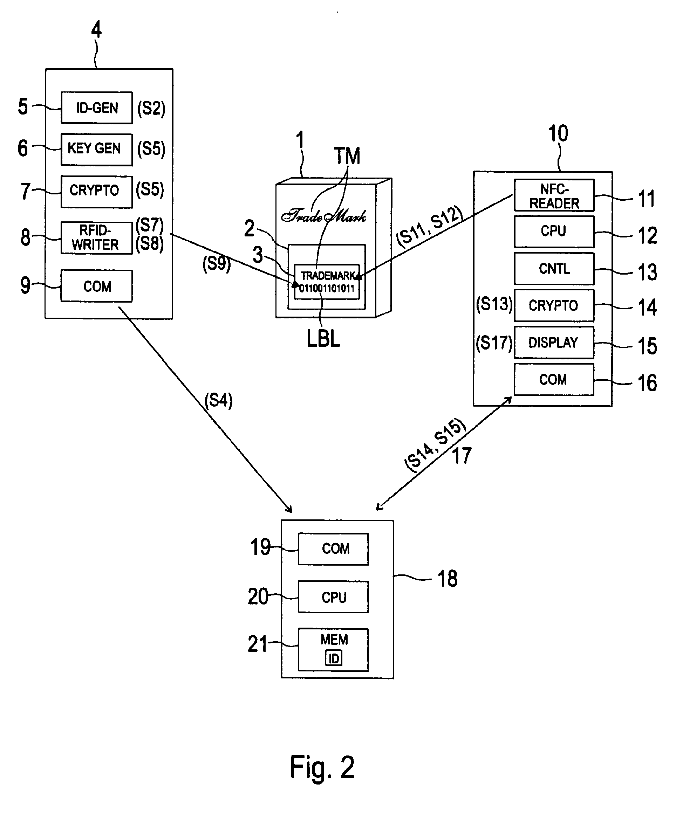

Weitere Merkmale der Erfindung ergeben sich aus der folgenden Beschreibung verschiedener erfindungsgemäßer Ausführungsbeispiele und Ausführungsalternativen. Es wird auf die folgenden Figuren verwiesen, welche zeigen:
- Fig.1: ein Flussdiagramm eines erfindungsgemäßen Verfahrens zum Kennzeichnen eines Produkts sowie zum Prüfen eines gekennzeichneten Produkts; und
- Fig. 2: eine schematische Illustration eines erfindungsgemäß gekennzeichneten Produkts sowie von Vorrichtungen zum Kennzeichnen und zum Prüfen eines gekennzeichneten Produkts.
Das in Fig. 2 dargestellte Produkt 1 wird durch eine Kennzeichnungsvorrichtung 4, die in einem gesicherten Bereich eines Produktherstellers installiert ist, im Rahmen eines Produktionsprozesses mit einer Produktkennzeichnung LBL ("Label") versehen, die einer transformierten Produktidentifikation ID entspricht. Die Produktkennzeichnung LBL kann durch ein portables Prüfgerät 10 durch Rücktransformieren und Abgleichen der rücktransformierten Produktkennzeichnung LBL mit der Produktidentifikation ID geprüft werden. Dazu liegt die Produktidentifikation ID auf einem kontaktierbaren Hintergrundserver 18 vor. Durch die Prüfung der Produktkennzeichnung LBL wird die Echtheit des Produkts 1 verifiziert. Die Produktkennzeichnung LBL ist in einem RFID-Etikett 2 abgespeichert, das auf dem Produkt 1 angebracht ist, und kann somit leicht ausgelesen werden. Ein RFID-Etikett 2 - bzw. ein RFID-Transponder - umfasst prinzipiell eine Antenne, einen analogen Schaltkreis zum Empfangen und Senden, sowie einen digitalen Schaltkreis und einen permanenten Speicher. Beim Auslesen sendet das RFID-Etikett selbst kein elektromagnetisches Feld aus, sondern verändert nur das elektromagnetische Sendefeld des Lesegeräts. Ein RFID-Etikett kann prinzipiell im elektromagnetischen Nahfeld oder im Fernfeld ausgelesen werden, abhängig von der Betriebsfrequenz des Etiketts.

Vorzugsweise wird die Produktkennzeichnung LBL durch Entschlüsseln mit einer öffentlich zugänglichen Produktbezeichnung TM ("Trade Mark") rücktransformiert, die einen öffentlichen Entschlüsselungsschlüssel eines asymmetrischen Schlüsselpaars repräsentiert. Die Produktbezeichnung TM ist vorzugsweise auch in einem auf dem Produkt 1 angebrachten RFID-Etikett 2 abgespeichert. Neben der asymmetrischen Ver-/Entschlüsselung kann jede beliebige andere geeignete Transformation/Rücktransformation, mathematische Verfremdung oder Verknüpfung eingesetzt werden.

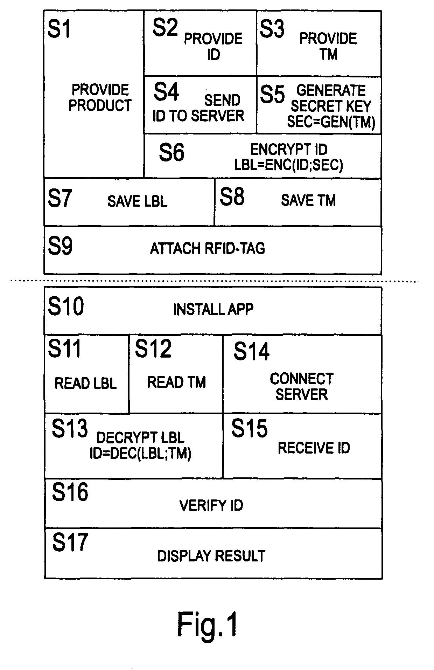

Das entsprechende in Fig.1 illustrierte Verfahren besteht aus zwei Teilverfahren, dem Teilverfahren zum Kennzeichnen des Produkts 1 (Schritte S1 bis S9) und dem Teilverfahren zum Prüfen der Produktkennzeichnung LBL (Schritte S10 bis S17). Nachfolgend werden die beiden Teilverfahren unter gleichzeitiger Bezugnahme auf die Vorrichtungen der Fig. 2 beschrieben. Schritte, die in Fig.1 nebeneinander angeordnet sind, sind unabhängig voneinander und können prinzipiell in beliebiger Reihenfolge oder parallel durchgeführt werden.

Ausgangspunkt des Verfahrens ist die Herstellung eines zu kennzeichnenden Produkts 1 in Schritt S1 (PROVIDE PRODUCT). In Schritt S2 erzeugt ein ID-Generator 5 der Kennzeichnungsvorrichtung 4 eine Produktidentifikation ID, die das Produkt 1 eindeutig als von dem entsprechenden Hersteller hergestelltes Produkt 1 identifiziert (PROVIDE ID). Hierbei kann eine Produktidentifikation ID gewählt werden, die genau einmal existiert und dem betreffenden Produkt eineindeutig zugeordnet ist, oder eine Produktidentifikation ID, die mehreren Produkten 1 des gleichen Herstellers zugeordnet ist. Vorzugsweise wird jedoch eine eineindeutige Produktidentifikation ID verwendet, mit der nicht nur der Rückschluss auf den Produkthersteller und somit auf die Echtheit des Produkts 1 möglich ist, sondern die das Produkt 1 eindeutig identifiziert, z.B. um weitere Informationen über das Produkt zu erhalten.

In Schritt S3 wird eine Produktbezeichnung TM bereitgestellt (PROVIDE TM), die vorzugsweise für jedermann öffentlich zugänglich bzw. ohnehin bekannt ist, beispielsweise ein Produktname, der Name des Produktherstellers, oder, wie in Fig. 2 beispielhaft gezeigt, eine Produktmarke. Die Marke TM eignet sich besonders gut für die Funktion eines öffentlichen Entschlüsselungsschlüssels eines asymmetrischen kryptographischen Verfahrens, da die Marke TM eine ohne weiteres öffentlich zugängliche Bezeichnung des Produkts 1 ist, die nicht wie herkömmliche öffentliche Schlüssel über eine gesonderte Infrastruktur in Umlauf gebracht werden muss, sondern zumindest jedem Besitzer des zu prüfenden Produkts 1 vorliegt. Sofern die Produktbezeichnung TM jedoch lediglich in dem RFID-Etikett 2 gespeichert ist und sich nicht zusätzlich sichtbar auf dem Produkt 1 befindet, kann die Produktbezeichnung TM auch ein sonstiger Code sein, der zwar in der Art und Weise eines öffentlichen Entschlüsselungsschlüssels eingesetzt wird, aber gleichwohl nicht prinzipiell öffentlich zugänglich oder ohnehin bekannt sein muss.

In Schritt S4 wird die Produktidentifikation ID über eine Kommunikationseinrichtung 9 (COM) der Kennzeichnungsvorrichtung 4 an eine entsprechende Kommunikationseinrichtung 19 (COM) des Hintergrundservers 18 gesendet (SEND ID TO SERVER), wo sie in einem Speicher 21 (MEM) zur späteren Verwendung durch ein Prüfgerät 10 hinterlegt wird. Der Hintergrundserver 18 kann hierbei in dem abgesicherten Bereich des Produktherstellers sein oder bei einem Sicherheitsdienstleister stehen, der die Echtheitsprüfung von gekennzeichneten Produkten technisch umsetzt. Im letztgenannten Fall ist die Kommunikationsverbindung zwischen der Kennzeichnungsvorrichtung 4 und dem Hintergrundserver 18 vorzugsweise kryptographisch gesichert.

In den Schritten S5 und S6 wird die Produktkennzeichnung LBL durch Transformation der Produktidentifikation ID erzeugt. Vorzugsweise wird dies durch eine asymmetrische Ver-/Entschlüsselung erreicht, wobei die Produktidentifikation ID durch Verschlüsselung mit einem geheimen Verschlüsselungsschlüssel transformiert wird (vgl. Schritt S6) und durch Entschlüsselung mit einem komplementären öffentlichen Entschlüsselungsschlüssel rücktransformiert wird (vgl. Schritt S13).

In Schritt S5 erzeugt ein Schlüsselgenerator 6 (KEY GEN) abhängig von der gewählten Produktbezeichnung TM als öffentlichem Entschlüsselungsschlüssel einen dazu passenden geheimen Verschlüsselungsschlüssel SEC = GEN(TM) (GENERATE SECRET KEY). Der so erzeugte geheime Verschlüsselungsschlüssel SEC und die vorzugsweise öffentlich zugängliche Produktbezeichnung TM bilden dann ein asymmetrisches, kryptographisches Schlüsselpaar (SEC, TM). In Schritt S6 wird die Produktidentifikation ID durch eine Kryptographieeinheit 7 (CRYPTO) der Kennzeichnungsvorrichtung 4 mit dem in Schritt S5 erzeugten geheimen Verschlüsselungsschlüssel SEC verschlüsselt und auf diese Weise eine Produktkennzeichnung LBL = ENC(ID;SEC) erzeugt (ENCRYPT ID). Hierbei kann die Kennzeichnungsvorrichtung 4 einen Prozessor (nicht dargestellt) umfassen, der einen jeweils als eigenständige Applikation ausgestalteten ID-Generator 5, Schlüsselgenerator 6 und die Kryptographieeinrichtung 7 ausführen kann.

In Schritt S7 wird die Produktkennzeichnung LBL von einem RFID-Schreibgerät 8 (RFID WRITER) in einen Speicher 3 des RFID-Etikett 2 eingeschrieben (SAVE LBL). Unabhängig davon, ob die Produktbezeichnung TM lesbar auf das Produkt 1 aufgebracht wird, wird sie in Schritt S8 vorzugsweise auch in den Speicher 3 des RFID-Etiketts 2 geschrieben (SAVE TM). Das RFID-Etikett 2 wird schließlich in Schritt S9 auf das Produkt 1 aufgebracht bzw. an diesem befestigt (ATTACH RFID-TAG). Im Rahmen der vorliegenden Erfindung ist unter dem Aufbringen/ Anbringen des RFID-Etiketts auf das/dem Produkt das Befestigen des RFID-Etiketts auf dem Produkt selbst oder einer Verpackung des Produkts zu verstehen. Das RFID-Etikett wird vorzugsweise so befestigt, dass es nicht ohne Zerstörung oder Beeinträchtigung des Produkts entfernt werden kann. Hierfür kann jedes geeignete Befestigungsverfahren eingesetzt werden, z.B. Aufkleben, Aufheften, Aufschweißen oder jedes andere geeignete Verfahren zum möglichst stabilen und irreversiblen Verbinden des RFID-Etiketts mit dem Produkt.

Das Einschreiben der Produktkennzeichnung LBL in das RFID-Etikett 2 ist hierbei unbedingt erforderlich, um das Produkt 1 einer späteren Echtheitsprüfung anhand der Produktkennzeichnung LBL unterziehen zu können, während der Schritt S8 prinzipiell auch entfallen kann, wenn die Produktbezeichnung TM eine einem Endverbraucher oder Zwischenhändler möglicherweise ohnehin bekannte Angabe ist. Dies könnte beispielsweise bei besonders bekannten Marken der Fall sein, die ein Endverbraucher unmittelbar mit dem Produkt assoziiert, so dass sie selbst auf dem Produkt 1 nicht lesbar angebracht sein muss. Um eine bequeme, zügige und fehlerfreie Echtheitsprüfung zu gewährleisten, ist es aber besonders vorteilhaft, die Produktbezeichnung TM gemeinsam mit der Produktkennzeichnung LBL in dem RFID-Etikett 2 abzuspeichern.

Die Kennzeichnung LBL ist aufgrund der Verschlüsselung mit dem geheimen Schlüssel SEC in Schritt S6 derart ausgestaltet, dass aus ihr durch eine Entschlüsselung mit der Produktbezeichnung TM die Produktidentifikation ID in Schritt S13 wiedergewonnen werden kann. Diese wichtige Eigenschaft der Produktkennzeichnung LBL wird dadurch sichergestellt, dass in Schritt S5 der geheime Schlüssel SEC abhängig von der bereits vorher festgelegten Produktbezeichnung TM erzeugt wird, wodurch sich eine eineindeutige Zuordnung der Schlüssel des Schlüsselpaars ergibt. Dies stellt sicher, dass die Produktidentifikation ID mit dem geheimen Verschlüsselungsschlüssel SEC derart verschlüsselt werden kann, dass die Produktidentifikation ID durch Entschlüsseln der Produktkennzeichnung LBL mit der Produktbezeichnung TM ermittelt wird.

Bei Schritt S9 ist sowohl das Aufbringen des RFID-Etiketts 2 auf dem Produkt 1 selbst als auch auf eine mit dem Produkt verbundene Produktverpackung möglich. Auch kann das RFID-Etikett 2 auf ein gesondertes, mit dem Produkt 1 verbundenes Dokument aufgebracht werden, z.B. auf eine Garantiebescheinigung, ein Echtheitszertifikat oder dergleichen. Bevorzugt wird allerdings die Anbringung des RFID-Etiketts 2 auf dem Produkt selbst, damit eine Prüfung der Produktkennzeichnung LBL während des gesamten Lebenszyklus des Produkts 1 leicht möglich ist. Vorzugsweise wird das RFID-Etikett 2 für Dritte sichtbar auf das Produkt 1 aufgebracht. Der Besitzer des Produkts 1 kann das RFID-Etikett 2 dann für Dritte sichtbar entwerten, z.B. durch durchbrechen oder anderweitige Zerstörung. Auf diese Weise kann ein Besitzer eines Markenprodukts, nachdem er sich selbst von der Echtheit des Produkts überzeugt hat, die Echtheitsprüfung dauerhaft unterbinden, um z.B. Diebstählen vorzubeugen oder eine Verfolgbarkeit des Produkts aus Datenschutzgründen auszuschließen.

Zum Prüfen der Echtheit des Produkts 1 anhand der Produktkennzeichen LBL benötigt ein Endverbraucher, Zwischenhändler oder ein sonstiger Besitzer des Produkts 1 ein portables Prüfgerät 10, auf dem in Schritt S10 eine Steuerapplikation 13 (CNTL) installiert wird (INSTALL APP), die sämtliche Schritte der Echtheitsprüfung koordiniert und die die kryptographische Prüfung der Produktkennzeichen LBL veranlasst. Die Steuerapplikation 13 wird hierbei von einem Prozessor 12 (CPU) des Prüfgeräts 10 ausgeführt und hat Zugriff auf bzw. umfasst eine Kryptographieeinheit (CRYPTO) 14, ähnlich der Kryptographieeinheit 7 der Kennzeichnungsvorrichtung 4. Das Prüfgerät 10 kann beispielsweise ein mobiles Telekommunikationsendgerät, ein persönlicher digitaler Assistent oder ein tragbarer Computer sein, der mit einem Lesegerät 11 ausgestattet ist, das das RFID-Etikett 2 auslesen kann. Die Steuereinrichtung 13 kann vorzugsweise aus dem Internet auf das Prüfgerät 10 geladen werden, z.B. von einer Website des Produktherstellers oder eines Sicherheitsdienstleisters, der den Hintergrundserver 10 betreibt.

in Schritt S11 wird zur Prüfung der Echtheit des Produkts 1, die Produktkennzeichnung LBL und in Schritt S12 die Produktbezeichnung TM mittels einer Leseeinrichtung 11 des Prüfgeräts 10 aus dem RFID-Etikett 2 ausgelesen (READ LBL; READ TM). Die Leseeinrichtung 11 ist prinzipiell ein RFID-Lesegerät, das auf die Konfiguration des betreffenden RFID-Etiketts 2 abgestimmt ist und dieses auslesen kann. Sie erzeugt ein elektromagnetisches Feld, um über die Antenne des RFID-Etiketts 2 die Produktkennzeichnung LBL und möglicherweise auch die Produktbezeichnung TM aus dem Speicher 3 des RFID-Etiketts 2 auszulesen. Vorzugsweise ist die Leseeinrichtung 11 ein NFC-Lesegerät, das die Produktbezeichnung TM und Produktkennzeichnung LBL im elektromagnetischen Nahfeld gemäß einem NFC-Protokoll ausliest.

Falls die Produktbezeichnung TM als lesbare Zeichenkette, z.B. als Produktmarke oder Produktname, auf dem Produkt 1 aufgebracht ist, kann der Schritt S12 jedoch genau wie der Schritt S8 auch entfallen. Die Produktbezeichnung TM wird dann von einem Benutzer des Prüfgeräts 10 abgelesen und über eine Eingabevorrichtung (nicht dargestellt) in das Prüfgerät 10 eingegeben. Ebenso ist denkbar, eine sichtbar auf dem Produkt 1 angebrachte Produktbezeichnung TM mit einem optischen Lesegerät oder dergleichen auszulesen bzw. abzuscannen.

Die kryptographische Prüfung der Produktkennzeichnung LBL wird in Schritt S13 von der Prüfapplikation 13 zusammen mit der Kryptographieeinrichtung 14 vorgenommen (DECRYPT LBL). Hierbei wird die Produktkennzeichnung LBL mit der als öffentlichem Entschlüsselungsschlüssel eingesetzten Produktbezeichnung TM entschlüsselt, um die Produktidentifikation ID = DEC(LBL; TM) wieder zu erhalten. Das Ergebnis der Rücktransformation S13 wird in Schritt S16 gegenüber der Produktidentifikation ID verifiziert (VERIFY ID).

Dazu wird in Schritt S14 durch eine Kommunikationseinrichtung 16 (COM) des Prüfgeräts 10 eine Datenkommunikationsverbindung 17 zu dem Hintergrundserver 18 aufgebaut, z.B. zu dessen Kommunikationseinrichtung 19. Über die Datenkommunikationsverbindung wird entweder die im Speicher 21 abgelegte Produktidentifikation ID von dem Hintergrundserver 18 angefordert und empfangen (Schritt S15; RECEIVE ID) oder die rücktransformierte (entschlüsselte) Produktkennzeichnung LBL an den Hintergrundserver 18 gesendet. Im erstgenannten Fall wird der Vergleich von Produktidentifikation ID und rücktransformierter Produktkennzeichnung LBL durch die Steuereinrichtung 13 des Prüfgeräts 10 ausgeführt (Schritt S16; VERIFY ID), während im letztgenannten Fall der Prozessor 20 des Hintergrundservers 18 den Vergleich durchführt und das Vergleichsergebnis über die Datenkommunikationsverbindung 17 an das Prüfgerät 10 zurückschickt.

Sofern das Entschlüsselungsergebnis DEC(LBL; TM) des Schritts S13 mit der vom Produkthersteller in Schritt S2 bereitgestellten Produktidentifikation ID übereinstimmt, ist eine Echtheit des Produkts 1 nachgewiesen und eine Nachahmung oder Fälschung des Produkts 1 auszuschließen. In jedem Fall wird das Vergleichsergebnis in Schritt S17 auf einer Anzeigeneinrichtung 15 des Prüfgeräts 10 dargestellt, z.B. auf einem Display eines Mobilfunktelefons, so dass der Benutzer unmittelbar erfährt, ob das überprüfte Produkt echt ist oder eine Fälschung ist.

Da die Zuverlässigkeit der Echtheitsprüfung des Produkts 1 und die Integrität der Produktkennzeichnung LBL wesentlich von der Geheimhaltung des geheimen Verschlüsselungsschlüssels SEC abhängt, werden die Schritte S1 bis S9 zur Produktkennzeichnung und insbesondere die kryptographischen Schritte S5 und S6 vorzugsweise in einem abgesicherten Bereich beim Produkthersteller durchgeführt, z.B. in einer zugangsbeschränkten Sicherheitsumgebung. Demgegenüber kann die Prüfung eines gekennzeichneten Produkts 1 (Schritte S10 bis S17) von einem Endverbraucher, Zwischenhändler oder dergleichen jederzeit unabhängig durchgeführt werden.

Falls der Identifikationscode der Produktidentifikation ID lediglich eine Echtheitsinformation vermitteln soll, ist es ausreichend, wenn diese eine dem Hersteller eineindeutig zuzuordnende Angabe ist, die sogar für alle Produkte des Herstellers oder zumindest für bestimmte Produktserien gleich sein kann. Da eine Geheimhaltung der Produktidentifikation ID für die Integrität des Kennzeichnungs- und Prüfungsverfahrens nicht unbedingt erforderlich ist, kann die Produktidentifikation ID insofern auch eine öffentlich zugängliche Information sein, die vom Produkthersteller veröffentlicht werden oder sogar auch auf dem Produkt angegeben sein kann. Die Produktidentifikation ID kann aber ihrerseits auch bestimmte produktbezogene Details kodieren, z.B. Herstellungsdatum, Herstellungsort, Garantieangaben, Chargennummer oder dergleichen, so dass die Prüfung der Produktkennzeichnung LBL gleichzeitig eine Ermittlung dieser produktbezogenen Information darstellt. In diesem Falle wird die Produktidentifikation ID dem entsprechenden Produkt 1 eineindeutig zuzuordnen sein, d.h., es existieren keine zwei Produkte mit der gleichen Produktidentifikation ID.

## Patentansprüche

1. Verfahren zum Kennzeichnen eines Produkts (1), umfassend die folgenden Schritte:
- Bereitstellen (S2) einer dem Produkt (1) zugeordneten Produktidentifikation (ID);
- Bilden (S6) einer Produktkennzeichnung (LBL) durch Transformieren der Produktidentifikation (ID); und
- Aufbringen (S7, S9) der Produktkennzeichnung (LBL) auf das Produkt (1);
**dadurch gekennzeichnet, dass** die Produktkennzeichnung (LBL) auf das Produkt (1) aufgebracht wird, indem die Produktkennzeichnung (LBL) in ein RFID-Etikett (12) eingeschrieben wird (S7) und das RFID-Etikett (2) auf das Produkt (1) aufgebracht wird (S9).

2. Verfahren nach Anspruch 1, **dadurch gekennzeichnet, dass** die Produktkennzeichnung (LBL) von einem RFID-Schreibgerät (8) in einen Speicher (3) des RFID-Etiketts (2) derart eingeschrieben wird (S7), dass die Produktkennzeichnung (LBL) durch ein Prüfgerät (10) ausgelesen werden kann.

3. Verfahren nach Anspruch 1 oder 2, **dadurch gekennzeichnet, dass** die Produktidentifikation (ID) auf einem über eine Datenkommunikationsverbindung (17) zugänglichen Hintergrundserver (18) zur späteren Prüfung der Produktkennzeichnung (LBL) des Produkts (1) gespeichert wird (S4).

4. Verfahren nach einem der Ansprüche 1 bis 3, **dadurch gekennzeichnet, dass** das RFID-Etikett (2) derart auf das Produkt (1) aufgebracht wird (S9), dass es für Dritte sichtbar zerstört werden kann.

5. Verfahren nach einem der Ansprüche 1 bis 4, **dadurch gekennzeichnet, dass** die Produktkennzeichnung (LBL) gebildet wird, indem die Produktidentifikation (ID) mit einem geheimen Verschlüsselungsschlüssel (SEC) derart verschlüsselt wird (S6), dass die Produktidentifikation (ID) durch Entschlüsseln der Produktkennzeichnung (LBL) mit einer öffentlich zugänglichen Produktbezeichnung (TM) des Produkts (1) als öffentlichem Entschlüsselungsschlüssel ermittelbar ist.

6. Verfahren nach Anspruch 4 oder 5, **dadurch gekennzeichnet, dass** der geheime Verschlüsselungsschlüssel (SEC) abhängig von der öffentlich zugänglichen Produktbezeichnung (TM) als öffentlichem Entschlüsselungsschlüssel derart erzeugt wird (S5), dass der geheime Verschlüsselungsschlüssel (SEC) und der öffentliche Entschlüsselungsschlüssel (TM) ein asymmetrisches, kryptographisches Schlüsselpaar (SEC, TM) bilden.

7. Verfahren nach einem der Ansprüche 4 bis 6, **dadurch gekennzeichnet, dass** die Produktbezeichnung (TM) von einem RFID-Schreibgerät (8) in einen Speicher (3) des RFID-Etiketts (2) derart eingeschrieben wird (S8), dass die Produktbezeichnung (TM) durch ein Prüfgerät (10) ausgelesen werden kann, und/oder für Dritte sichtbar und/oder als lesbare Zeichenkette auf das Produkt (1) aufgebracht wird.

8. Verfahren nach Anspruch 2 oder 7, **dadurch gekennzeichnet, dass** das Einschreiben (S7, S8) der Produktkennzeichnung (LBL) und/ oder der Produktbezeichnung (TM) in das RFID-Etikett (2) in einem abgesicherten Bereich (4) eines Herstellers des Produkts (1) durchgeführt wird.

9. Verfahren nach einem der Ansprüche 1 bis 8, **dadurch gekennzeichnet, dass** als Produktidentifikation (ID) ein dem Produkt (1) eineindeutig zugeordneter Identifikationscode bereitgestellt wird (S2), der zumindest einen Rückschluss auf eine Echtheit des Produkts (1) ermöglicht.

10. Verfahren zum Prüfen einer Echtheit eines durch ein Verfahren nach einem der Ansprüche 1 bis 9 **gekennzeichneten** Produkts (1), **dadurch gekennzeichnet, dass** die folgenden Schritte von einem portablen Prüfgerät (10) ausgeführt werden:
- Auslesen (S11) der Produktkennzeichnung (LBL) aus dem RFID-Etikett (2) des Produkts (1);
- Rücktransformieren (S11) der Produktkennzeichnung (LBL);
- Aufbauen (S14) einer Datenkommunikationsverbindung (17) zwischen dem Prüfgerät (10) und einem Hintergrundserver (18), auf dem die Produktidentifikation (ID) vorliegt;
- Abgleichen (S15, S16) der rücktransformierten Produktkennzeichnung (LBL) mit der Produktidentifikation (ID) über die Datenkommunikationsverbindung (17) mit dem Hintergrundserver (18).

11. Verfahren nach Anspruch 10, **dadurch gekennzeichnet, dass** beim Schritt des Abgleichens entweder
das Prüfgerät (10) die Produktidentifikation (ID) über die Datenkommunikationsverbindung (17) von dem Hintergrundserver (18) empfängt (S15) und die rücktransformierte Produktkennzeichnung (LBL) mit der empfangenen Produktidentifikation (ID) vergleicht (S16); oder
das Prüfgerät (10) die rücktransformierte Produktkennzeichnung (LBL) über die Datenkommunikationsverbindung (17) an den Hintergrundserver (18) sendet und ein Vergleichsergebnis eines Vergleichs der gesendeten rücktransformierten Produktkennzeichnung (LBL) mit der Produktidentifikation (ID) von dem Hintergrundserver (18) über die Datenkommunikationsverbindung (17) empfängt.

12. Produkt (1), umfassend eine auf dem Produkt (1) aufgebrachte Produktkennzeichnung (LBL), die eine transformierte, dem Produkt (1) zugeordneten Produktidentifikation (ID) repräsentiert, **dadurch gekennzeichnet, dass** die Produktkennzeichnung (LBL) in einem auf dem Produkt (1) aufgebrachten RFID-Etikett (2) gespeichert ist.

13. Produkt (1) nach Anspruch 12, **dadurch gekennzeichnet, dass** die Produktkennzeichnung (LBL) in einem Speicher (3) des RFID-Etiketts (2) derart gespeichert ist, dass die Produktkennzeichnung (LBL) mittels eines Prüfgeräts (10) ausgelesen werden kann.

14. Portables Prüfgerät (10) zum Prüfen einer Echtheit eines Produkts nach einem der Ansprüche 12 bis 13, umfassend einen Prozessor (12), eine Leseeinrichtung (11) zum Auslesen der Produktkennzeichnung (LBL) aus dem RFID-Etikett (2) des Produkts (1), eine Steuereinrichtung (13) und eine Kommunikationseinrichtung (16), **dadurch gekennzeichnet, dass** die Kommunikationseinrichtung (16) eingerichtet ist, eine Datenkommunikationsverbindung (17) zu einem Hintergrundserver (18) aufzubauen, auf dem die Produktidentifikation (ID) vorliegt, und die Steuereinrichtung (13) eingerichtet ist, die ausgelesene Produktkennzeichnung (LBL) rückzutransformieren und die rücktransformierte Produktkennzeichnung (LBL) über die Datenkommunikationsverbindung (17) zu dem Hintergrundserver (18) mit der Produktidentifikation (ID) abzugleichen.
